**Europäisches Patentamt**

**European Patent Office**

**Office européen des brevets**

(19)

(11) Veröffentlichungsnummer: **0 125 546**
**B1**

(12) # EUROPÄISCHE PATENTSCHRIFT

(45) Veröffentlichungstag der Patentschrift:
· **30.03.88**

(21) Anmeldenummer: **84104747.5**

(22) Anmeldetag: **27.04.84**

(51) Int. Cl.⁴: **C 02 F 3/12,** C 02 F 3/30,
C 02 F 3/34

(54) **Verfahren zur Reinigung von Abwasser in Anlagen mit Adsorptionsstufe.**

(30) Priorität: **13.05.83 DE 3317371**

(43) Veröffentlichungstag der Anmeldung:
**21.11.84 Patentblatt 84/47**

(45) Bekanntmachung des Hinweises auf die Patenterteilung:
**30.03.88 Patentblatt 88/13**

(84) Benannte Vertragsstaaten:
**BE CH FR GB IT LI NL SE**

(56) Entgegenhaltungen:
**DE - B - 1 584 873**

**'KORRESPONDENZ ABWASSER, 30. Jahrgang, Februar 1983, Seiten 104-111, GFA, St. Augustin, DE. D. EITNER: "Untersuchungen zur Nutzung eines belüfteten Sandfanges als Adsorptionsstufe"**
**"Bergey's Manual of Determinative Bacteriology", 8. Ausgabe, 1975, Seiten XXIII-XXVI, 4-9, Williams & wilkins Company, Baltimore, USA**
**GWF-WASSER/ABWASSER, 118. Jahrgang, Heft 1, 1977, Seiten 15-23, München, DE; L. MÜLLER: "Das Belebungsverfahren ohne Vorreinigung. Ergebnisse der Versuche im halbtechnischen Massstab im Klärwerk Karlsruhe"**

(73) Patentinhaber: **Böhnke, Botho, Prof. Dr.-Ing.,**
**Maria-Theresia-Allee 231, D-5100 Aachen (DE)**

(72) Erfinder: **Böhnke, Botho, Prof. Dr.-Ing.,**
**Maria-Theresia-Allee 231, D-5100 Aachen (DE)**
Erfinder: **Diering, Bernd, Dr.-Ing.,**
**Martin-Luther-Strasse 10, D-5100 Aachen (DE)**

(74) Vertreter: **Andrejewski, Walter et al, Patentanwälte**
**Andrejewski, Honke & Partner**
**Postfach 10 02 54 Theaterplatz 3, D-4300 Essen 1 (DE)**

## Beschreibung

Die Erfindung bezieht sich gattungsgemäss auf ein Verfahren zur Reinigung von Abwasser mit Hilfe eines mehrstufigen, insbesondere zweistufigen, Belebtschlammverfahrens, wobei die erste Belebungsstufe als Adsorptionsstufe mit einer Schlammbelastung von mindestens 2 kg $BSB_5$ pro Kilogramm Trockensubstanz und Tag aerob oder fakultativ anaerob mit Prokaryonten in der arbeitenden Biomasse betrieben wird und die Biozönosen der ersten Belebungsstufe und nachgeschalteter Belebungsstufen getrennt werden. Ein solches Verfahren ist bekanntlich ein kontinuierliches Verfahren. In der Fachwelt wird die Adsorptionsstufe kurz als A-Stufe bezeichnet. Die Trennung der Biozönosen erfolgt durch Zwischenklärung und dadurch, dass kein Schlamm aus der zweiten oder einer weiteren Belebungsstufe in die erste, hochbelastete Belebungsstufe zurückgeführt wird. In der Adsorptionsstufe wird der Schlamm durch geeigneten Schlammabzug über eine Zwischenklärung in der Einarbeitungsphase gehalten, in der Substratatmung einsetzt. Um den Schlamm in der ersten Belebungsstufe in diesem Zustand zu halten, bedarf es eines geringen Schlammalters und eines entsprechend gesteuerten Schlammabzuges aus der Zwischenklärung. In Verbindung mit der Raumbelastung von etwa 10 kg $BSB_5$ pro Kubikmeter und Tag in der ersten Belebungsstufe erreicht man, dass dort hauptsächlich eine Aufspaltung oder Krackung, Adsorption bzw. Flockung höhermolekularer Verbindungen im Vordergrund steht und diese Verbindungen über die Zwischenklärung mit dem Überschussschlamm ausgetragen werden. Die bei anderen Verfahren für den Abbau dieser Verbindungen erforderliche Energie wird somit eingespart. In nachgeschalteten Belebungsstufen können die niedermolekularen und leichter abbaubaren Verbindungen besonders leicht und schnell biologisch abgebaut werden. Das kann im einzelnen auf verschiedene Weise verwirklicht werden (vgl. DE-A 2 640 875 zum sogenannten AB-Verfahren und die DE-A 2 908 134 zum sogenannten ATB-Verfahren) und hat sich bewährt, jedoch ist das Verhalten von Reinigungsanlagen mit Adsorptionsstufe als erste Belebungsstufe bei pH-Stössen, Salzstössen, toxischen Stössen und dergleichen, d. h. das Stabilitätsverhalten, verbesserungsfähig.

In anderem Zusammenhang, nämlich beim Ausbau einer einstufigen Belebungsanlage mit vorgeschaltetem Sandfang zu einer zweistufigen Anlage, in der der belüftete Sandfang als Adsorptionsstufe arbeitet, ist vorgeschlagen worden (Korrespondenz Abwasser 30 (2) Seiten 104–111) in dieser Adsorptionsstufe mit einer mittleren Schlammbelastung von 2,4 kg $BSB_5$ pro kg TS und Tag zu arbeiten. Daraus lässt sich errechnen, dass in Kubikzentimeter etwa 575 Millionen Prokaryontenkeime enthalten sein können. Es ist jedoch nicht angegeben, wie man arbeiten muss, um sicherzustellen, dass in der Adsorptionsstufe selbst bei pH-Stössen, Salzstössen und toxischen Stössen stabil praktisch nur Prokaryonten arbeiten.

Der Erfindung liegt die Aufgabe zugrunde, das gattungsgemässe Verfahren so zu führen, dass entsprechend eingerichtete Abwasserreinigungsanlagen mit Adsorptionsstufe sich durch besonderes, verbessertes Stabilitätsverhalten bei pH-Stössen, Salzstössen, toxischen Stössen und dergleichen auszeichnen.

Zur Lösung dieser Aufgabe lehrt die Erfindung, dass die Populationsdichte der Biozönosen in der Adsorptionsstufe bestimmt und überwacht wird sowie auf einem mittleren Wert von $\geq 500$ Millionen Prokaryontenkeimen in Kubikzentimeter gehalten wird, indem man der Adsorptionsstufe mit dem Rohabwasser pro Volumeneinheit 2 Gew.-% bis 15 Gew.-% der in der Volumeneinheit der Adsorptionsstufe arbeitenden Biomasse in Form von Prokaryonten als Ergänzungsbiomasse zuführt. Eine bevorzugte Ausführungsform der Erfindung ist dadurch gekennzeichnet, dass in der Adsorptionsstufe eine mittlere Populationsdichte von zumindest 700 Millionen Prokaryontenkeimen im Kubikzentimeter aufrechterhalten wird. Prokaryonten meint insbesondere Protocyten und damit Darmbakterien (vgl. Hans G. Schlegel «Allgemeine Mikrobiologie», 1981, Abschnitte 3., 3.1 bis 3.16). Die Erfindung nutzt die Tatsache, dass solche Prokaryonten in jedem, mit einem mehrstufigen Belebtschlammverfahren behandelbaren Abwasser ausreichend enthalten sind, um aus dem Rohabwasser die Ergänzungsbiomasse zu entnehmen bzw. mit dem Rohabwasser die Ergänzungsbiomasse zu entnehmen bzw. mit dem Rohabwasser die Ergänzungsbiomasse zuzuführen. Die Menge der Ergänzungsbiomasse kann daher auch durch eine Variation der Vorklärung zwischen «Teilvorklärung» und «Vorklärungsfrei» eingestellt werden.

Insbesondere sind Prokaryonten in kommunalem Abwasser enthalten. In der Ausführungsform für die Reinigung von kommunalem Rohabwasser kommt man zu besonders stabilen Betriebsverhältnissen, wenn die Ergänzungsbiomasse in einer Menge von 5 bis 15 Gew.-% zugeführt wird. In der Ausführungsform für industrielles, jedoch Prokaryonten mitführendes Rohabwasser, lehrt die Erfindung, dass die Ergänzungsbiomasse in einer Menge von 1 bis 5 Gew.-% zugeführt wird. Es versteht sich, dass auch Überschneidungen dieser Bereiche möglich sind. In allen Fällen kommt man zu erstaunlicher Verfahrensstabilität bei pH-Stössen, Salzstössen, toxischen Stössen und dergleichen. Ein jeweils optimaler Wert für die Ergänzungsbiomasse kann unschwer durch Leitversuche ermittelt werden. Im Rahmen der Erfindung liegt es, in Abweichung von den gattungsgemässen Massnahmen bei gleicher Schlammbelastung die Raumbelastung auf etwa 50 bis 80 kg $BSB_5$ pro Kubikmeter und Tag zu erhöhen, – bei entsprechender Erhöhung der Konzentration des Rohabwassers.

Die Erfindung geht von der überraschenden Tatsache aus, dass bei Betrieb der Adsorptionsstufe mit Prokaryonten, und zwar insbesondere Protocyten in Form von Darmbakterien, der im Abwasser enthaltene Rohschlamm völlig zu Bakterienschlamm aufgearbeitet wird, so dass jegliche Ähnlichkeit zum Frischschlamm verschwunden ist. Der in der Adsorptionsstufe produzierte und gleichmässig aussehende Schlamm bildet grobe, braun-schwärzliche Flocken, die sich schnell absetzen und einen Schlammindex von etwa 50 bis 70 ml/g aufweisen. Die Schlammflocken setzen sich aus gleichmässig aufgebauten Bakterienhaufen und Bakterienkolonien zusammen. Das gilt auch gegenüber kolloidal gelösten Substanzen und nicht absetzbaren Stoffen. Man kommt so zu einer deutlich besseren Elimination schwer abbaubarer Substanzen. Es sind keine Eukaryonten oder Protozonen zu finden. Der Belebtschlamm neigt zur Zopfbildung. Dabei arbeitet die Adsorptionsstufe, auch bei den angegebenen pH-Stössen, Salzstössen, toxischen Stössen und dergleichen stabil, wenn in der angegebenen Weise Ergänzungsbiomasse ständig zugeführt wird. Die Effekte beruhen vermutlich auf einer hohen Vermehrungsrate der Prokaryonten. Das ist auch der Grund, weshalb erfindungsgemäss der Belebtschlamm in der Adsorptionsstufe einen höheren organischen Anteil als üblicher Belebtschlamm aufweist. Summarisch betrachtet ist festzustellen, dass sich dieser Bakterienschlamm durch eine höhere physiologische Aktivität auszeichnet. Im Ergebnis wird das Rohabwasser in der Adsorptionsstufe bei kurzer Behandlungszeit zu einem besonderen Substrat so aufgearbeitet, dass in der nachfolgenden biologischen Stufe ein deutlich besserer biologischer reinigungseffekt auftritt. Durchgeführte Untersuchungen zeigen, dass bei dem erfindungsgemässen Verfahren einerseits eine mehrfach höhere Anzahl von Mikroorganismen je Gramm Trockensubstanz in Belebtschlamm vorhanden ist, und zwar mit geringer Artenhäufigkeit. Es kann davon ausgegangen werden, dass die Prokaryonten, mit denen erfindungsgemäss gearbeitet wird, ohne weiteres in einem pH-Bereich von vier Einheiten leben können, wodurch bereits eine beachtliche Stabilitätsverbesserung bei pH-Stössen resultiert, und zwar sowohl im sauren als auch im basischen Bereich. Darüber hinaus gibt es unter den Prokaryonten anscheinend Arten oder Mutanten, die diesen Bereich aufweiten können oder die in der Lage sind, sich auf extreme Randbedingungen einzustellen, und zwar mit grosser Variabilität zwischen reiner Population und gemischter Population. Die Prokaryonten, insbesondere die Protocyten und Darmbakterien, wachsen sehr schnell. Sie haben bei optimalen, durch die Menge der Ergänzungsbiomasse eingestellten Lebensbedingungen in der Adsorptionsstufe eine Generationsfolge von nur etwa einer Stunde. Folglich können sie einem sehr starken Selektionsdruck ausgesetzt werden, wobei sie sich in kurzer Zeit wechselnden Umweltbedingungen anpassen. Die Anpassung geschieht häufig in wenigen Stunden. Die Anpassungsbefähigung liegt in der Kleinheit der Zellen, die unspezifisch strukturiert sind sowie sehr kurze Teilungszeiten aufweisen. Da die gesamte genetische Information der Prokaryonten einerseits auf einem einzigen Chromosomenfaden enthalten ist, und andererseits die Masse der einzelnen Prokaryonten ausserordentlich klein ist, ist bei der binären Spaltung eine rasche Teilung der Bakterienzellen möglich. Von besonderem Vorteil ist die Tatsache, dass wegen der geringen Grösse die Oberfläche einer gleichschweren Menge von Prokaryonten um zumindest den Faktor 10 grösser ist als die der Eukaryonten. Da der Stoffwechsel über die Oberfläche erfolgt, ist auch eine entsprechend hohe Umsatzaktivität und Nahrungsspeicherkapazität durch Einbettung in eine entsprechende, zumeist schleimige Substanz möglich. Die Erfindung nutzt die Tatsache, dass die Darmflora im Darmtrakt der Warmblütler unter anderem aus Prokaryonten besteht, und zwar zu einem erheblichen Anteil aus der Familie Euterobacteriaceae. Diese Euterobakterien sind fakultativ anaerob und vermögen somit über Atmung (aerob) und Gärung (anaerob) Energie zu gewinnen. Das nach dem erfindungsgemässen Verfahren der Kläranlage zufliessende Rohabwasser enthält ständig solche Prokaryonten. Etwa ein Drittel des Faeces bestehen aus einer solchen Bakterienmasse (etwa $10^{11}$ Protocyten/g). Sie werden erfindungsgemäss zum Zwecke der Erreichung hoher Verfahrensstabilität als Ergänzungsbiomasse ständig in die Adsorptionsstufe eingeführt. Dabei ist etwa ein Drittel der in der Adsorptionsstufe eintretenden Bakterienmasse noch völlig aktiv, wenn es nach der Lehre der Erfindung ohne Vorklärung oder teilvorgeklärt in die Adsorptionsstufe eingeführt wird. Die erreichte Stabilitätsverbesserung ist eine Folge der grossen Variabilitätsbreite der Prokaryonten der Evolution dieser Darmbakterien oder Prokaryonten in der Adsorptionsstufe und damit eine Folge des Anpassungszwanges der Selektion und der ständig stattfindenden Mutationen. Entsprechende statistische Untersuchungen führen zu dem Ergebnis, dass bei dem erfindungsgemässen Verfahren sich bei auftretenden pH-Stössen, Salzstössen, toxischen Stössen und dergleichen in kurzer Zeit immer wieder lebensfähige und widerstandsfähige Protocyten herauszüchten, die die Reinigungsarbeit übernehmen. Die Erfindung nutzt diese Eigenschaft zur Stabilisierung von nach dem Adsorptionsverfahren arbeitenden Abwasseranlagen.

Bei Anlagen für die Reinigung von Abwasser, die in klassischer Weise mit einem belüfteten Sandfang arbeiten, liegt es insbesondere bei Neubauten im Rahmen der Erfindung, den belüfteten Sandfang nach dem erfindungsgemässen Verfahren zu betreiben. Auch kann die A-Stufe mit Sauerstoff bzw. mit sauerstoffangereicherter Luft betrieben werden, sei es offen oder mit geschlossenem Fermenter.

Im Rahmen der Erfindung kann die zweite Belebungsstufe beliebig ausgebildet und ausgelegt sein. Es kann sich z.B. um eine Stufe mit Belebungsbecken oder um eine Tropfkörperanlage handeln. Im Rahmen der Erfindung liegt es, der zweiten Belebungsstufe weitere Stufen nachzuschalten.

## Patentansprüche

1. Verfahren zur Reinigung von Abwasser mit Hilfe eines mehrstufigen, insbesondere zweistufigen, Belebtschlammverfahrens, wobei die erste Belebungsstufe als Adsorptionsstufe mit einer Schlammbelastung von mindestens 2 kg BSB$_5$ pro Kilogramm Trockensubstanz und Tag aerob oder fakultativ anaerob mit Prokaryonten in der arbeitenden Biomasse betrieben wird und die Biozönosen der ersten Belebungsstufe und nachgeschalteter Belebungsstufen getrennt werden, dadurch gekennzeichnet, dass die Populationsdichte der Biozönosen in der Adsorptionsstufe bestimmt und überwacht wird sowie auf einen mittleren Wert von ≥500 Millionen Prokaryontenkeimen im Kubikzentimeter gehalten wird, indem man der Adsorptionsstufe mit dem Rohabwasser pro Volumeneinheit 2 Gew.-% bis 15 Gew.-% der in der Volumeneinheit der Adsorptionsstufe arbeitenden Biomasse in Form von Prokaryonten als Ergänzungsbiomasse zuführt.

2. Verfahren nach Anspruch 1, dadurch gekennzeichnet, dass in der Adsorptionsstufe eine mittlere Populationsdichte von zumindest 700 Millionen Prokaryontenkeimen im Kubikzentimeter aufrechterhalten wird.

3. Verfahren nach einem der Ansprüche 1 oder 2, dadurch gekennzeichnet, dass die Menge der Ergänzungsbiomasse durch eine Variation der Vorklärung zwischen «Teilvorklärung» und «Vorklärungsfrei» eingestellt wird.

4. Verfahren nach Anspruch 3 in der Ausführungsform für kommunale Rohabwasser, dadurch gekennzeichnet, dass die Ergänzungsbiomasse in einer Menge von 5 bis 15 Gew.-% zugeführt wird.

5. Verfahren nach Anspruch 3 in der Ausführungsform für industrielles, jedoch Prokaryonten mitführendes Abwasser, dadurch gekennzeichnet, dass die Ergänzungsbiomasse in einer Menge von 2 bis 5 Gew.-% zugeführt wird.

## Claims

1. A process for the purification of sewage by means of a multi-stage, particularly a two-stage, activated sludge process, in which the first activation stage is operated as an aerobic or optionally anaerobic adsorption stage, with procaryotic cells in the working biomass, with a sludge loading of at least 2 kg. BOD$_5$ per kilogramme of dry substance per day, and the bacterial colonies of the first activation stage and the subsequent activation stages are separated, characterised in that the population density of the bacterial colonies in the adsorption stage is fixed and supervised, and maintained at an average value of ≥500 million procaryotic cells per cubic centimetre, with 2%–15% by weight of the biomass at work in each unit volume of the adsorption stage added as supplementary biomass to each unit volume of raw sewage in the form of procaryotic cells.

2. A process according to Claim 1, characterised in that an average population density of at least 700 million procaryotic cells per cubic centimetre is maintained in the adsorption stage.

3. A process according to Claim 1 or 2, characterised in that the quantity of supplementary biomass is adjusted by varying the preclarification between «partial preclarification» and «no preclarification».

4. A process according to Claim 3 for purification of communal sewage, characterised in that the supplementary biomass is added in a quantity of 5% to 15% by weight.

5. A process according to Claim 3 for purification of industrial sewage, which however contains procaryotic cells, characterised in that the supplementary biomass is added in a quantity of 2% to 5% by weight.

## Revendications

1. Procédé d'épuration d'eaux usées moyennant l'utilisation d'un procédé à boues activées mis en œuvre dans plusieurs étages et notamment dans deux étages, le premier étage d'activation étant utilisé en tant qu'étage d'adsorption avec une charge en boue d'au moins 2 kg BSB$_5$ par kilogramme de substance sèche et par jour, selon un mode aérobie ou facultativement selon un mode anaérobie, avec des procaryotes dans la biomasse traitée, et des biocénoses intervenant dans le premier étage d'activation et dans des étages d'activation situés en aval, étant séparés, caractérisé en ce qu'on détermine et on contrôle la densité de population des biocénoses dans l'étage d'adsorption et on la maintient à une valeur moyenne ≥500 millions de germes de procaryotes par centimètre cube, grâce au fait qu'on introduit par unité de volume dans l'étage d'adsorption, avec les eaux usées brutes, 2% en poids à 15% en poids de la biomasse travaillant dans l'unité de volume de l'étage d'adsorption, sous la forme de procaryotes en tant que biomasse complémentaire.

2. Procédé selon la revendication 1, caractérisé en ce que, dans l'étage d'adsorption, on maintient une densité moyenne de population d'au moins 700 millions de germes de procaryotes par centimètre cube.

3. Procédé selon l'une des revendications 1 ou 2, caractérisé en ce qu'on règle la quantité de la biomasse complémentaire en faisant varier la clarification préliminaire entre «la clarification préliminaire partielle» et «l'absence de clarification préliminaire».

4. Procédé selon la revendication 3, dans le mode d'exécution utilisé pour des eaux usées brutes communales, caractérisé en ce qu'on introduit la biomasse complémentaire sous la forme d'une quantité de 5 à 15% en poids.

5. Procédé selon la revendication 3, dans le mode d'exécution utilisé pour des eaux usées industrielles, mais entraînant des procaryotes, caractérisé en ce qu'on introduit la biomasse complémentaire en une quantité de 2 à 5% en poids.